# EUROPEAN PATENT APPLICATION

(11) **EP 4 262 058 A1**
(43) Date of publication of application: **18.10.2023**
(21) Application number: 22167747.9
(22) Date of filing: 12.04.2022
(51) Int. Cl.: H02K 3/28, H02K 7/18, H02K 21/00

(54) **MULTI-WINDING SET FRACTIONAL SLOT SYNCHRONOUS MACHINE**

(71) Applicant: Siemens Gamesa Renewable Energy A/S, 7330 Brande (DK)
(72) Inventor: Li, Guang-jin, Sheffield, S17 3PA (GB); Rudden, Isaac, Sheffield, S3 7ET (GB); Azar, Ziad, Sheffield, S10 4ED (GB); Clark, Richard, Worrall, S35 0AF (GB); Duke, Alexander, Sheffield, S10 5SN (GB); Zhu, Zi-Qiang, Sheffield, S10 5TR (GB)
(74) Representative: SGRE-Association

(57) **Abstract**

It is described an electrical machine (1), in particular dual three-phase fractional slot synchronous machine, comprising: a stator (3) providing plural slots (5) between plural teeth (6); a first multi-phase winding set (7); a second multi-phase winding set (8), wherein the first winding set (7) and the second winding set (8) are both provided as star-delta connection and at least partially arranged in the slots (5) and wound around the teeth (6).

## Description

### Field of invention

The present invention relates to an electrical machine, in particular a dual three-phase fractional slot synchronous machine, which may for example be configured as a generator of a wind turbine. Furthermore, the present invention relates to a wind turbine comprising the electrical machine and further relates to a method of manufacturing an electrical machine.

### Art Background

Conventional electrical machines equipped with fractional slot concentrated windings (FSCW) may offer a number of advantages compared to integer slot machines. The advantages may include ease of manufacture, higher fault tolerance and shorter end-windings. However, the non-overlapping windings may result in a less sinusoidal MMF (magneto-motive force) distribution with a large number of loss producing harmonics. This may pose a problem to the efficiency of employing this winding structure in large machines, as these unwanted MMF harmonics may induce losses in the rotor and permanent magnets (PMs) which may also lead to thermal de-magnetization. Mitigating these losses by employing segmentation of the magnets and usage of higher resistivity materials may add to complexity and costs. Additionally, the induced harmonics may increase the torque ripple of a machine which may become particularly undesirable in large offshore wind turbines where the order of magnitude of torque is in MNm.

Conventionally, fractional slot concentrated windings may introduce unwanted MMF harmonics and conventionally numerous methods have been investigated to minimize or mitigate them. The most common practices for minimizing these harmonics may include dual three-phases (or even multiphase machines), multi-layer windings and stator shifting.

One conventional example is a dual three-phase electrical machine. The dual three-phase electrical machine may provide an increased fault tolerance and reliability which may stem from a second converter connected to the second winding set. In a fractional slot concentrated winding machine, the second converter may be employed at a 30° phase-shift relative to the first converter, which is connected to the first winding set. This configuration has the additional benefit of eliminating the first sub-space winding MMF harmonic thereby reducing rotor losses and torque ripple.

As a second conventional example, multi-layer windings are provided in an electrical machine. Traditionally, the electrical machines have either single-layer or double-layer windings (one or two coil sides per slot). In wind power applications, the electrical machines acting as generators usually have a single-layer configuration. Unfortunately, FSCW with single-layer windings may have the largest number of unwanted MMF harmonics. By moving to increased number of layers, such as double-layer, triple-layer, four-layers, etc., the amplitude of these harmonics may be substantially reduced. However, thereby, also winding complexity increases.

As a third conventional example, stator shifting has been applied. Thereby, the harmonics is minimized by introducing a second winding set to the stator of the electrical machine at a phase-shift chosen to minimize a selected harmonic. This may entail doubling the number of stator slots such that the new winding set operates at a phase-shift of one half of a slot pitch (mechanical degrees).

However, it has been observed that conventional fractional slot electrical machines produce undesired harmonics which may hamper the operation of the machine, in particular when operated as a generator.

Thus, there may be a need for an electrical machine, in particular a fractional slot synchronous machine, further in particular a dual three-phase fractional slot synchronous machine, wherein undesired harmonics are at least decreased or even avoided. Further, there may be a need for an electrical machine, wherein losses are reduced and/or where torque ripples are reduced and/or harmonics are reduced.

### Summary of the Invention

This need may be met by the subject matter according to the independent claims. Advantageous embodiments of the present invention are described by the dependent claims.

According to an embodiment of the present invention it is provided an electrical machine, in particular dual three-phase fractional slot synchronous machine, comprising a stator providing plural slots between plural teeth; a first multi-phase winding set; a second multi-phase winding set, wherein the first and the second winding set are both provided as combined star-delta configuration and arranged in the slots and wound around the teeth.

The electrical machine may be configured or connected as a generator. The electrical machine may in particular be utilized as a generator of a wind turbine.

A fractional slot synchronous machine is characterized by the ratio between the number of stator slots and the number of rotor poles per phase being different from an integer but being a fractional number.

The electrical machine may comprise at least two winding sets, but may comprise more than two winding sets provided there are an even number of winding sets, such as four, six, eight, ten, or even a greater number of winding sets (The winding sets have to come in pairs (i.e. the number of windings sets being an even number), so e.g. four, six, eight winding sets, etc). Each winding set may provide at least three phases or even a higher number of phases, such as four phases, five phases, six phases, seven phases or even a higher number of phases.

At least the teeth of the stator may be manufactured from magnetically high permeable material. During operation, in the teeth and surrounding regions of the stator, oscillating magnetic fields may be generated. The stator material in particular of the teeth may be magnetized in dependence on moving permanent magnets which may be comprised in a rotor which rotates relative to the stator.

The first multi-phase winding set may comprise for each of the multiple phases plural coils that are formed by at least partially arranging or winding respective wire portions around the teeth of the stator and arranging wire portions within the stator slots at least partially. The second multi-phase winding set may be completely separate from the first multi-phase winding set and the two winding sets may not be (electrically) connected to each other. Providing a first and a second multi-phase winding set may enable to even operate the electrical machine if one of the first or the second winding set is faulty. Further, harmonics may be reduced.

A star-delta connection may be characterized by three corner nodes of a triangle, wherein the corner nodes are electrically connected by at least one coil, in particular two coils. Furthermore, from each triangle corner node, at least one coil, in particular two coils, may originate. The ends of the coils extending from the triangle corner nodes may provide the output terminals for the multiple phases of each of the winding sets. Providing both the first and also the second winding set in a star-delta connection may enable to reduce harmonics of MMF which is generated when the electrical machine is operated. Furthermore, losses may be reduced due to this configuration.

According to an embodiment of the present invention, the first multi-phase winding set provides a same number of phases as the second winding set, in particular three or four or five or an even greater number of phases. Having a same number of phases for both the first and the second winding set may enable a simple winding topology while still reducing losses and/or amplitudes of harmonics. The number of phases may for example amount to three, four, five, six, seven, eight, nine or ten or even a number higher than ten. The number of phases may be selected depending on the particular application.

According to an embodiment of the present invention, the number of phases provided by each of the first and the second winding set is three, wherein the first and/or the second three-phase winding set comprises for each phase: a first series connection of coils, on one end providing an output for that phase, another end being connected to or providing a delta corner node of in total three delta corner nodes (associated with three phases), wherein the three delta corner nodes are mutually connected with each other via three second series connections of coils, one second series connection being provided for each phase.

The principle of the invention can be extended to further numbered multiphase machines (having a number of phases being different from three), however the specifics of the machine topology differ as the number of phases increases. For example, a dual 5-phase star-delta wound machine with a number of slots equal to 40, and a number of poles equal to 18 would achieve complete cancellation of the first parasitic harmonic and complete cancellation of the 11th parasitic harmonic while maintaining the amplitude of the working 9th harmonic. For this to work, there would again be two identical winding sets each connected to a different converter this time at a 9 electrical degrees phase shift rather than 15 degrees in the 3-phase machine. The second winding set would be displaced circumferentially from the first winding set by 81° in this machine (as opposed to 75° in the 3-phase machine). Each winding set would again comprise of a combined 'star-delta' winding configuration, however as there are 5 phases the delta connected coils would be connected in a pentagram shape as opposed to the triangle shape seen in the 3-phase machine. Each of the series star coils would be connected to the nodes of the pentagram, as seen in the 3-phase machine. This principle can be extended to other phase numbers.

The first series connection of coils (for each phase of each of the first and second winding set) may comprise two or three or four or five or six or seven or eight or nine or ten or even a higher number of coils, such as between 10 and 200 coils. The same may hold for the second series connection of coils (for each phase and for each of the first and second winding sets). The three triangle corner nodes may be associated with the three phases. To each of the three triangle corner nodes, a first series connection of coils (corresponding to the respective phase of the delta corner node) may be connected. Between each pair of the triangle corner nodes, a respective one of a second series connection of coils is connected. In total, the electrical machine may comprise three first series connections of coils and three second series connections of coils for each winding set. For example, for each the first winding set and the second winding set, three first series connections of coils may be provided and three second series connections of coils may be provided. Thereby, a simple winding topology may be provided and losses and/or harmonics may be reduced.

According to an embodiment of the present invention, for each phase the first series connection of coils and the second series connection of coils comprises two or three or four or five or six or seven or eight or nine or between ten and 100 coils. The number of coils in the first series connection of coils and/or the second series connection of coils may be selected depending on the particular application. Thereby, greater flexibility may be provided, in particular supporting scaling up the capacity and/or rating.

According to an embodiment of the present invention, for each phase each of the first series connection of coils and the second series connection of coils comprises exactly two coils which are in particular arranged at the stator at circumferentially opposite locations, in particular circumferentially spaced apart by 180°. When the machine is extended, say to 48S/20P the rotational symmetry will be 4, so the series connected coils will be located at 90° intervals circumferentially around the stator.

A general rule, the shift angle (by which the series connected coils are spaced apart in the circumferential direction) is 180° mechanical degree divided by (the number of) repetition of 24S/10P combination, i.e for 48S/20P it is 180°/2=90° and so on.

When two coils for the first series connection and/or the second series connection are provided, the winding topology may be simplified and the performance may be improved.

The stator may provide a whole circumference forming a ring. The stator may span a circumference of 360°. The stator may be provided as an unsegmented or segmented stator. The slots may be circumferentially spaced apart from each other and wire portions of the first winding set and the second winding set may at least be partially arranged within the slots. The two coils arranged at opposite locations may exhibit a mirror symmetry, at least substantially. As an alternative characterization, the two coils may be arranged in a point symmetric manner, wherein the point symmetry center may be at a rotation axis of a rotor or may be defined to be a symmetry or rotational symmetry center of the stator. According to an embodiment of the present invention, at least one, in particular all, coil(s) of the first series connection of coils and/or the second series connection of coils is (are) formed by winding a wire (portion) of the first or second winding set around two circumferentially immediately adjacent teeth having a slot in between.

Thereby, advantageously, a first and a second winding set may be arranged in an easy manner at the stator. In the slot in between the circumferentially immediately adjacent teeth (around which a wire portion of the first or second winding set is wound), at least one (in particular two) wire portion(s) of the other of the first or second winding set may be arranged. In particular, two wire portions of the other of the first or second winding set may be arranged in the slot in between the circumferentially immediately adjacent teeth. Thereby, winding the first winding set and the second winding set may be in a corresponding, in particular equal, manner, merely shifted by one slot in the circumferential direction.

In adjacent slots, wire portions of the first winding set may alternate with wire portions belonging to the second winding set. Thereby, the first winding set and also the second winding set may appropriately be accommodated within the slots of the stator.

According to an embodiment of the present invention, in each slot of the plural slots two wires both belonging to the same winding set are arranged, wherein the two wires belong to same or different phases.

In each slot of the plural slots, one wire portion of a same winding set may belong to a coil of the first series connection of coils and the other wire portion (of the same winding set) may belong to a coil of the second series connection of coils. Thereby, a simple winding topology may be provided which may also reduce losses and/or harmonics.

According to an embodiment of the present invention, in two adjacent slots the two wires belong to same phase and in the next two adjacent slots the two wires belong to different phases. Thereby, the two winding sets may appropriately accompany the slots of the stator.

According to an embodiment of the present invention, the electrical machine further comprises a first converter having an input for every of the multiple phases which input is connected to an output end of this phase of the first winding set; a second converter having an input for every of the multiple phases which is connected to an output end of this phase of the second winding set.

The output end of a respective phase of the first winding set may be an end of a first series connection of coils. Analogously, the output of a respective phase of the second winding set may be formed by an end of a first series connection of the second winding set.

The first converter as well as the second converter may be controlled by providing and operating a controller, in particular comprising a first control portion and second control portion. The respective control portions may generate for example gate driver signals and supply those gate driver signals to gates of controllable switches, such as transistors or power transistors, comprised in the first converter and the second converter, respectively.

Providing the respective controller and the first converter and the second converter and connecting the first converter and second converter to the output ends of the first winding set and the second winding set, respectively, may enable appropriate control of the electrical machine, in particular regarding output voltage and/or output power and/or output reactive power and/or output frequency of the electrical machine.

Each of the first converter and the second converter may comprise an AC/DC portion (being connected to respective output ends of the first winding set and the second winding set, respectively), a DC-link, and a respective DC/AC converter portion. Thereby, it may be enabled to transform a variable frequency AC power stream to a fixed frequency power stream which may be supplied to a utility grid, for example via one or more wind turbine transformers and/or one or more wind park transformers.

According to an embodiment of the present invention, during operation for each phase currents conveyed in output ends of the first and second winding sets are electrically phase shifted by 15° and/or output ends of the first and second winding sets are physically spaced apart in the circumferential direction by 75°.

According to an embodiment of the present invention, the angle between adjacent star wound and delta wound coils is 30 mechanical degrees. This provides an electrical phase-shift of 150 electrical degrees. One of these coils can then be inverted, providing a phase-shift of 30 electrical degrees between adjacent star wound and delta wound coils.

By operating the winding sets having the indicated phase-shift, reduction of higher harmonics may effectively be achieved. In particular, a seventh harmonic order amplitude of a harmonic may significantly be reduced. Furthermore, the seventh harmonic order, the eleventh and the thirteenth and the seventeenth harmonic order may effectively be reduced. In other embodiments, other harmonic orders may be reduced depending on the number of slots, and/or number of poles and/or number of phases. The harmonic orders correspond to multiples of the electrical base frequency which depends on rotational speed, number of slots, number of poles and number of phases One embodiment of the present invention comprises exactly two winding sets, each individual set wound in star-delta. The configuration may be extended to include additional winding sets, but they must be introduced in pairs. For example, to extend the embodiment of the present invention to 48S/20P two additional winding sets could be introduced, however this would add no new harmonic cancellation effects and simply improve the fault tolerance in the event of a converter failure. More simplistically, if the embodiment of the present invention was extended to be 48S/20P then the winding layout for the original 24-slot would just be repeated in the new 24-slots, with the corresponding phases of each winding set being connected in series.

According to an embodiment of the present invention, the number of slots is a multiple of 24. Thereby, a large class of electrical machines may be provided and constructed. The electrical machine may for example comprise exactly 24 slots or 48, or three times or four times or five times or six times or even up to seven times to 100 times 24 slots. The number of poles may increase linearly with the number of slots.

According to an embodiment of the present invention, the electrical machine further comprises plural magnet poles rotatably supported relative to the stator, wherein the machine is configured as a fractional slot synchronous machine, wherein a ratio between a number of slots and a number of poles amounts in particular to 2.4, wherein the magnet poles further in particular comprise permanent-magnets.

When the ratio between the number of slots and the number of poles is 2.4, a simple winding topology may be enabled and implementation may be simplified and also manufacturing may be simplified. The ratio of 2.4 is necessary in any 3-phase machine employing dual star-delta windings. However, for different phase numbers this ratio would be different. For example, in a 5-phase machine the ratio must be 20/9 (40-slots/18-poles, 80-slots/36-poles, 120-slots/54-poles etc).

According to an embodiment it is provided a wind turbine, comprising an electrical machine according to one of the preceding claims configured as electrical generator; a rotor having mounted thereon plural rotor blades and being coupled to the generator.

The rotor may be an inner rotor or an outer rotor. Between the stator teeth and the permanent magnets, a gap may be provided.

It should be understood, that features, individually or in any combination, described or applied to an electrical machine, may also be provided or applied or employed, individually or in any combination, to a method of manufacturing an electrical machine according to embodiments of the present invention and vice versa.

According to an embodiment of the present invention it is provided a method of manufacturing an electrical machine, in particular dual three-phase fractional slot synchronous machine, the method comprising: manufacturing a stator providing plural slots between plural teeth; winding a first multi-phase winding set and a second multi-phase winding set around the teeth to be arranged in the slots (e.g. to form plural coils) and separately connecting wires (coils/windings) of the first winding set and the second winding set such that both the first winding set and the second winding set are provided as combined star-delta configuration.

Winding the first winding set and the second winding set may comprise to bend wire portions of the first winding set and the second winding set and slide the bent wire portions over the teeth, for example. Further, the manufacturing method may comprise to connect output ends of the multiple phases for each of the first winding set and the second winding set to respective converters.

The aspects defined above and further aspects of the present invention are apparent from the examples of embodiment to be described hereinafter and are explained with reference to the examples of embodiment.

### Brief Description of the Drawings

Fig. 1 schematically illustrates a sectional view viewed along an axial direction of an electrical machine according to an embodiment of the present invention;
Fig. 2 illustrates a connection diagram of a winding set as utilized in the electrical machine illustrated in Fig. 1 as the first winding set as well as the second winding set;
Fig. 3 schematically illustrates a rolled up and sectioned view of the stator including the winding sets of the electrical machine as illustrated in Fig. 1; and
Fig. 4 illustrates in a graph the amplitude of different harmonic orders as generated when the electrical machine illustrated in Fig. 1 is operated compared to conventional machines.

### Detailed Description

Embodiments of the present invention are now described with reference to the accompanying drawings. The invention is not restricted to the illustrated or described embodiments.

Embodiments of the present invention may employ two harmonic minimization strategies at the same time. Firstly, embodiments of the present invention employ stator shifting whereby the number of stator slots is doubled (compared to a conventional stator) and a second winding set is introduced in the second slot set. Secondly, embodiments of the present invention employ combined star and delta windings in each winding set to provide a secondary phase-shift between coils in series. Thereby, the performance of a dual three-phase machine may be mimicked. The combination of both features or techniques may successfully eliminate at least two unwanted harmonic components as have been observed in conventional systems.

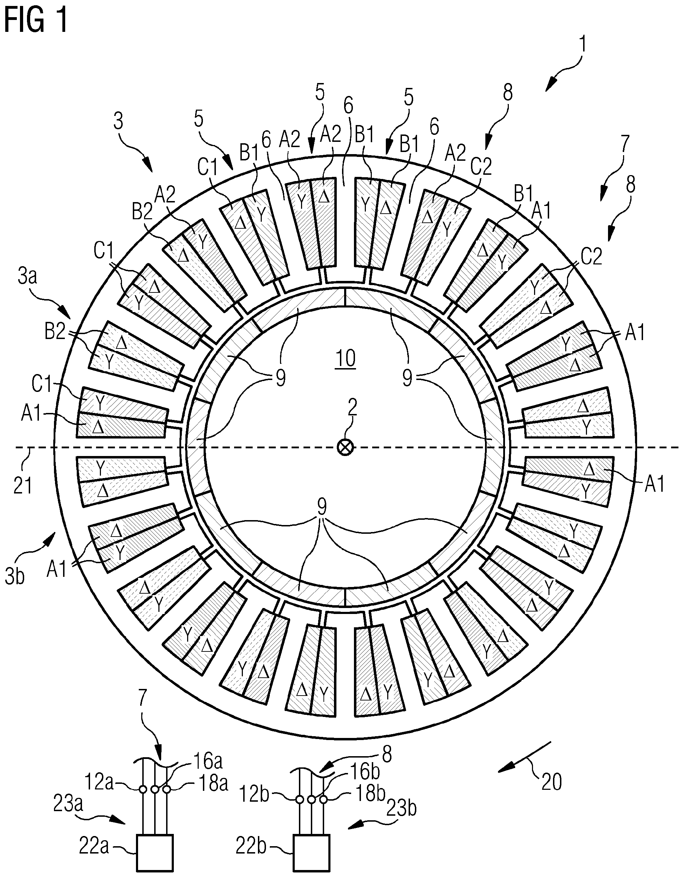

The electrical machine 1 schematically illustrated in **Fig. 1** in a sectional view viewed in the axial direction 2 comprises a stator 3 providing plural slots 5 between plural teeth 6. The electrical machine 1 further comprises a first multi-phase winding set 7 which comprises wire portions providing three phases A, B, C. The wire portions of the first winding set 7 are at least partly arranged in the slots 5 and wound around the teeth 6, wherein winding portions belonging to the A-phase of the first winding set are labelled with the reference sign A1. Wire portions of the first winding set belonging to the B-phase are labelled with reference sign B1 and wire portions belonging to the C-phase of the first winding set are labelled with reference sign C1.

Furthermore, the electrical machine 1 comprises a second multi-phase winding set 8, in particular three-phase winding set, wherein wire portions of the second winding set 8 are at least partially arranged in the slots 5 and wound around the teeth 6 of the stator 3. Wire portions of the second winding set belonging to the A-phase are labelled with reference sign A2, wire portions belonging to the B-phase are labelled with reference sign B2 and wire portions of the second winding set belonging to the C-phase are labelled with reference sign C2.

The electrical machine 1 further comprises plural magnet poles 9 which are mounted at a rotor 10 and which are therefore rotatably supported relative to the stator 3. The plural magnet poles 9 are in the illustrated embodiment configured as permanent magnets. The rotor 10 having mounted thereon the magnets 9 is rotatably supported allowing rotation about the rotation axis 2 being also the rotational symmetry axis of the electrical machine 1.

The electrical machine illustrated in Fig. 1 comprises twenty-four slots 5 and ten magnet poles 9, abbreviated 24S/10P. The electrical machine illustrated in Fig. 1 is configured as a fractional slot synchronous machine having two winding sets and providing three phases for each winding set.

The electrical machine 1 illustrated in Fig. 1 in a schematic sectional view may be comprised in a wind turbine according to an embodiment of the present invention. In this case, the rotor 10 may be mechanically coupled to a hub at which plural rotor blades are mounted.

In Fig. 1, for each phase of the first winding set, i.e. phases A1, B1, C1, four coils are provided, wherein the reference sign Y indicates a coil of a first series connection (or a star-series connection) and coils indicated with reference sign Δ indicate coils of a second series connection (or delta-series connection) as will be explained below in more detail.

In the illustrated electrical machine of Fig. 1, the number of slots is 24. In other embodiments, the number of slots may be a multiple of 24. Furthermore, in the illustrated embodiments, the rotor 10 has mounted thereon ten magnetic poles 9. Thus, the ratio between the number of slots (being 24) and the number of poles (being 10) amounts to 2.4.

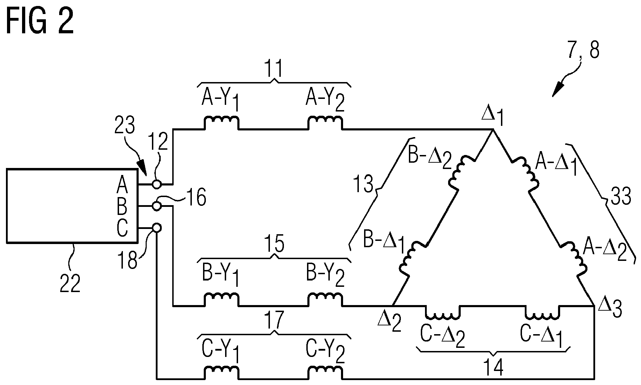

**Fig. 2** illustrates a circuit or connectivity diagram of a winding set 7 which may for example be employed as a first winding set 7 in the electrical machine of Fig. 1 or also of a second winding set 8 of the electrical machine 1 illustrated in Fig. 1. Thus, the electrical machine 1 illustrated in Fig. 1 comprises two winding sets, both configured as illustrated in Fig. 2 for the exemplary winding set 7.

In particular, the first multi-phase winding set 7 provide a same number of phases as the second winding set 8, namely in the illustrated embodiment of Figs. 1, 2, 3, each of the first winding set and the second winding set provide three phases. For each of the phases A, B, C, in particular for the phases A1, B1, C1 of the first winding set, the first winding set comprises a first series connection 11 of coils, one end 12 providing an output for that phase A, another end Δ1 being connected to or providing a delta corner node Δ1 of in total three delta corner nodes Δ1, Δ2, Δ3 which are associated with three phases A, B, C. The three delta corner nodes Δ1, Δ2, Δ3 are mutually connected with each other via three second series connections 12, 13, 14, wherein for each phase A, B, C, one second series connection is provided. In particular, for the A-phase, the second series connection 12 is provided, for the B-phase, the second series connection 13 is provided and for the C-phase, the second series connection 14 is provided.

Similarly, as for the phase A, for the phase B, a first series connection 15 is provided, one end 16 providing an output for that phase B, another end Δ2 being connected to or providing the delta corner node Δ2 of in total three delta corner nodes. Further, in analogy, for the C-phase, a first delta connection 17 of coils is provided, one end 18 providing an output for that phase and another end Δ3 being connected to or providing a delta corner node Δ3 of the three delta corner nodes.

In the illustrated embodiment, each of the first series connections of coils 11, 15, 17 comprises exactly two coils. In particular, the first series connection of coils 11 for the A-phase comprises the coils A-Y1 and A-Y2. The first series connection 15 of the B-phase comprises the coils B-Y1 and BY2 and for the C-phase, the first series connection 17 comprises the coils C-Y1 and C-Y2. Furthermore, also all second series connections 12, 13, 14 comprise exactly two coils, namely, for the A-phase the second series connection 12 comprises the coils A-Δ1 and A-Δ2. For the B-phase, the second series connection 12 of coils comprises the coils B-Δ1 and B-Δ2. For the C-phase, the second series connection 14 comprises the coils C-Δ1 and C-Δ2.

As will be explained below in more detail, the two coils of each of the series connections 11, 15, 17, 12, 13, 14 are arranged opposite to each other in the assembled stator 3. For example, for the A-phase of the first winding set, the electrical machine 1 illustrated in Fig. 1 comprises two Y-coils (in particular A-Y1 and A-Y2 (see Fig. 2)) which are arranged opposite to each other such that the rotation axis 2 may serve as a point symmetry center. Those two Y-coils are circumferentially spaced apart (i.e. in the circumferential direction 20) by 180°. Further, for the A-phase of the first winding set, the electrical machine 1 illustrated in Fig. 1 comprises two Δ-coils (in particular A-Δ1 and A-Δ2 (see Fig. 2)) which are arranged opposite to each other such that the rotation axis 2 may serve as a point symmetry center. Those two Δ-coils are circumferentially spaced apart (i.e. in the circumferential direction 20) by 180°.

The output ends 12, 16, 18 of the three phases A, B, C are connected to a converter 22. Fig. 2 applies to the first winding set 7 as well as to the second winding set 8.

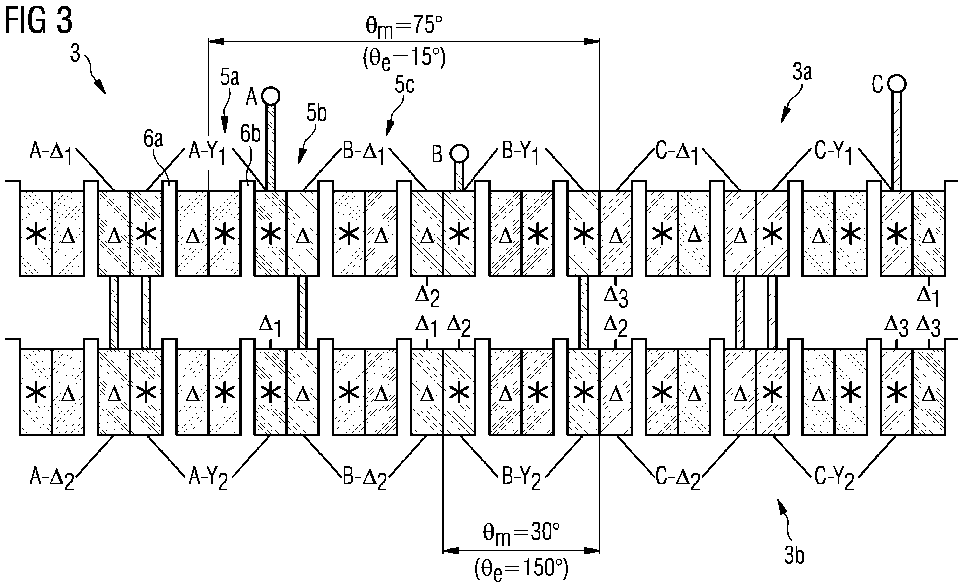

**Fig. 3** schematically illustrates a unrolled and sectioned view of the stator 3 illustrated in Fig. 1, the section line indicated with reference sign 21, the stator being composed of stator portion 3a and 3b. In Fig. 3 the stator portion 3a is illustrated above the stator portion 3b.

The output ends A, B, C of the three first series connections of coils, i.e. the first series connections 11, 15, 17, for the first winding set 7 are indicated. Furthermore, the coils of the first series connections of coils 11, 15, 17 of the first winding set are also indicated in Fig. 3. Furthermore, also the coils of the second series connections 12, 13, 14 are indicated and labelled with reference signs as defined in Fig. 2.

Furthermore, in Fig. 3, the three delta corner nodes Δ1, Δ2, Δ3 are indicated. It can be appreciated from Fig. 3 that for each phase of a particular winding set, for example the first winding set as in detail illustrated and labelled in Fig. 3, all coils of the first series connection of coils and also of the second series connection of coils are formed by winding a wire portion of the respective winding set around two circumferentially immediately adjacent teeth, for example teeth 6a and 6b, having a slot 5a in between.

It can further be appreciated from Fig. 3 that in each slot 5 of the stator slots, two wire portions are arranged both belonging to the same winding set. In none of the slots, wire portions of different winding sets are arranged.

The coils of the first (or second) winding set belonging to the first series connections of coils are further indicated with the label "*" (being a synonym for the label "Y" in Fig. 1) and the coils of the second series connections of coils are further denoted with the label "Δ" placed in the respective slot where the respective wire portions are actually arranged.

It is further evident from Fig. 3 that the wire portions belonging to the first winding set are arranged in every other slot, the slot in between being occupied by respective wire portions belonging to the second winding set. It is also evident from Fig. 3 that one wire portion of two wire portions for example arranged in one of the slots belongs to a coil of the first series connection of coils (being labelled with the "*" symbol) and another wire portion of the two wire portions belongs to a coil of the second series connection of coils (indicated by the Δ-symbol).

It is also evident from Fig. 3 that for example in three adjacent slots 5a, 5b, 5c, in one of the three slots, namely 5a, the two wire portions belong to a same phase (e.g. to C-phase of the second winding set); in the second, i.e. 5b, slot of the three slots, the two wire portions belong to different phases (for example belong to phases A and B of the first winding set in slot 5b) and in a third of the three adjacent slots, namely in the slot 5c, the two wire portions belong to different phases (e.g. to phases C and A of the second winding set). Thereby, the first 5a, the second 5b and the third 5c slots are arranged circumferentially spaced apart in this order.

In Fig. 3 it is also indicated that during operation, for each phase, currents conveyed in output ends of the first and second winding sets are electrically phase-shifted by 15° (Θe = 15°) and/or output ends of the first and second winding sets are physically spaced apart in the circumferential direction by 75° (Θm = 75°). Furthermore, there is an electrical phase-shift of 150° between the terminals or outputs ends adjacent star and delta coils of the same phase and there is a mechanical shift of 30° between output ends or terminals of adjacent star and delta coils of the same phase.

With reference again to Fig. 1, the electrical machine 1 further comprises, according to an embodiment of the present invention, a first converter 22a having an input 23a for every of the multiple phases which input is connected to an output end 12a, 16a, 18a of this phase of the first winding set 7. The electrical machine 1 further comprises a second converter 22b, having an input 23b for every of the multiple phases which is connected to an output end 12b, 16b, 18b of this phase of the second winding set. The output ends 12a, 16a, 18a and 12b, 16b, 18b correspond to the output ends 12, 16, 18 of the exemplary winding set 7 illustrated in Fig. 2. Embodiments of the present invention combine the practice of stator shifting with employing star-delta windings to eliminate two unwanted parasitic windings MMF harmonics. Star-delta windings are able to mimic the performance of a dual three-phase machine, eliminating the first sub-space harmonic. Then, by practice of stator shifting, a second winding set is introduced for which a second converter is operated at a 15° phase-shift, thus eliminating a second unwanted super-harmonic.

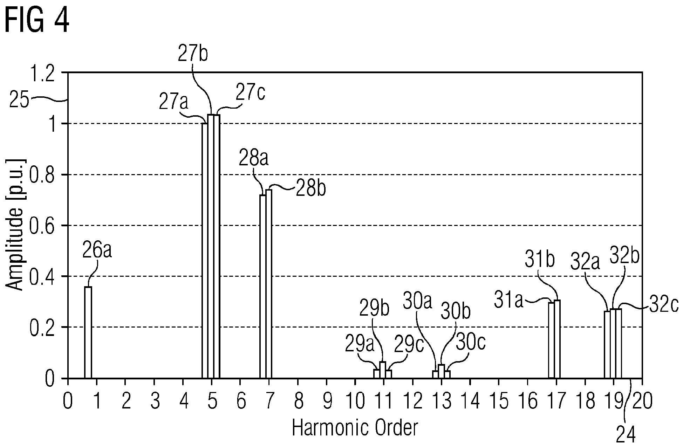

**Fig. 4** illustrates in a coordinate system having an abscissa 24 indicating the harmonic order and having an ordinate 25 indicating the amplitude, the observed amplitudes of a conventional 12S/10P three-phase electrical machine, wherein the observed amplitudes are labelled with reference signs 27a, 28a, 29a, 30a, 31a and 32a. Furthermore, a 12S/10P dual three-phase was investigated and the respective amplitudes 27b, 28b, 29b, 30b, 31b and 32b are observed. Finally, the observed amplitudes of the different harmonics for the 24S/10P dual star-delta electrical machine according to an embodiment of the present invention are indicated with reference signs 27c, 29c, 30c, 32c.

It can be observed, that the electrical machine according to the embodiment of the present invention does not exhibit any significant amplitudes for the harmonic orders 1, 7, 11, 13, 17. In contrast thereto, the conventional electrical machines exhibit significant harmonic order amplitude for the harmonic orders 7 and 17. Thereby, by reducing the amplitudes of the harmonic orders 7 and 17 in particular, losses of the system may be reduced and lifetime may be prolonged and also performance may be improved.

According to embodiments of the present invention, the following advantages may be provided:
Reduced rotor hysteresis and Eddy current loss and reduced permanent magnet Eddy current loss and/or reduced torque ripple.

In particular, the successful elimination of both one parasitic sub- and two parasitic super-harmonics (in particular harmonics 1, 7 and 17) may reduce losses in both the rotor iron core and the permanent magnets. The first sub-harmonic may be a large contributor to rotor losses and so machine efficiency may be increased by this harmonic elimination alone. The added impact of eliminating a super-harmonic (for example harmonic 17) is to further reduce rotor losses as well as substantially reduce permanent magnet Eddy current losses. By reducing permanent magnet Eddy current losses, not only the machine efficiency may be improved, but also the risk of thermal de-magnetization may be reduced.

Reduced torque interaction between slots and poles (and due to increased lowest common multiple in FSCW design) initially reduces cogging torque. Coupled with the elimination of unwanted MMF harmonics, this may also serve to further reduced torque ripple.

The electrical machine may in particular be utilized or configured as a wind turbine generator which may in particular be employed in an offshore wind farm. Both stator shifting and star-delta winding may be used individually to minimize unwanted harmonics. The embodiments of the present invention, however, utilize both strategies in conjunction and combination including two converters (used in dual three-phase machines) to eliminate both one sub- and one super-space harmonic.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Electrical machine (1), in particular dual three-phase fractional slot synchronous machine, comprising:
a stator (3) providing plural slots (5) between plural teeth (6);
a first multi-phase winding set (7);
a second multi-phase winding set (8),
wherein the first winding set (7) and the second winding set (8) are both provided as star-delta connection and at least partially arranged in the slots (5) and wound around the teeth (6).

2. Electrical machine according to the preceding claim, wherein the first multi-phase winding set (7) provide a same number of phases as the second winding set (8), in particular three or four or five or six or seven or an even greater number of phases.

3. Electrical machine according to one of the preceding claims, wherein the number of phases provided by each of the first winding set (7) and the second winding set (8) is three,
wherein the first and/or the second three-phase winding set comprises for each phase:
a first series connection (11, 15, 17) of coils, on one end (12, 16, 18) providing an output for that phase (A, B, C), another end being connected to or providing a delta corner node (Δ1, Δ2, Δ3) of in total three delta corner nodes, wherein the three delta corner nodes (Δ1, Δ2, Δ3) are mutually connected with each other via three second series connections (12, 13, 14) of coils, one second series connection being provided for each phase.

4. Electrical machine according to the preceding claim, wherein for each phase (A, B, C) the first series connection of coils (11, 15, 17) and the second series connection (12, 13, 14) of coils comprises two or three or four or five or six or seven or eight or nine or between ten and 100 coils.

5. Electrical machine according to one of the two preceding claims, wherein for each phase (A, B, C) each of the first series connection of coils and/or the second series connection of coils comprises exactly two coils (A-Yl, A-Y2) which are in particular arranged at the stator at circumferentially opposite locations, in particular circumferentially spaced apart by 180°.

6. Electrical machine according to one of the three preceding claims, wherein, for each phase, at least one, in particular all, coil (A-Yl) of the first series connection of coils and/or the second series connection of coils is formed by winding a wire portion of the first or second winding set around two circumferentially immediately adjacent teeth (6a, 6b) having a slot (5a) in between.

7. Electrical machine according to one of the preceding claims, wherein in each slot (5) of the plural slots two wire portions both belonging to the same winding set (7, 8) are arranged, wherein one wire portion of the two wire portions belongs to a coil of the first series connection (11, 15, 17) of coils and another wire portion of the two wire portions belongs to a coil of the second series connection (12, 13, 14) of coils, wherein the two wire portions belong to a same phase or to different phases.

8. Electrical machine according to the preceding claim,
wherein in a first (5a) of three adjacent slots (5a, 5b, 5c) the two wire portions belong to a same phase (C2) and/or
in a second (5b) of the three adjacent slots the two wire portions belong to different phases (A1, B1), and/or
in a third (5c) of the three adjacent slots the two wire portions belong to different phases (C2, A2),
the first, the second and the third slots in particular being arranged circumferentially spaced apart in this order.

9. Electrical machine according to one of the preceding claims, further comprising:
a first converter (22a) having an input (23a) for every of the multiple phases which input is connected to an output end (12a, 16a, 18a) of this phase of the first winding set (7) ;
a second converter (22b) having an input (23b) for every of the multiple phases which is connected to an output end (12b, 16b, 18b) of this phase of the second winding set (8).

10. Electrical machine according to the preceding claim, wherein during operation for each phase currents conveyed in output ends of the first and second winding sets (7, 8) are electrically phase shifted by 15° and/or output ends of the first and second winding sets are physically spaced apart in the circumferential direction by 75°.

11. Electrical machine according to one of the preceding claims, further comprising:
at least one pair of two further multi-phase winding sets;
wherein the two further winding sets are each provided as star-delta connection and at least partly arranged in the slots and wound around the teeth.

12. Electrical machine according to one of the preceding claims, wherein a number of slots (5) is a multiple of 24.

13. Electrical machine according to one of the preceding claims, further comprising:
plural magnet poles (9) rotatably supported relative to the stator (5),
wherein the machine is configured as a fractional slot synchronous machine,
wherein a ratio between a number of slots and a number of poles amounts in particular to 2.4,
wherein the magnet poles (9) further in particular comprise permanent-magnets.

14. Wind turbine, comprising:
an electrical machine according to one of the preceding claims configured as electrical generator;
a rotor (10) having mounted thereon plural rotor blades and being coupled to the generator.

15. Method of manufacturing an electrical machine (1), in particular dual three-phase fractional slot synchronous machine, the method comprising:
manufacturing a stator (3) providing plural slots (5) between plural teeth (6);
winding a first multi-phase winding set (7) and a second multi-phase winding set (8) around the teeth at least partially to be arranged in the slots (6);
separately connecting wires of the first winding set and the second winding set such that both the first winding set and the second winding set are provided as star-delta connection.
